Europäisches Patentamt

(19) European Patent Office

Office européen des brevets

(11) Numéro de publication : **0 191 712 B1**

(12) **FASCICULE DE BREVET EUROPEEN**

(45) Date de publication du fascicule du brevet :
19.06.91 Bulletin 91/25

(21) Numéro de dépôt : **86460001.0**

(22) Date de dépôt : **05.02.86**

(51) Int. Cl.⁵ : **A23B 4/02**

(54) **Machine à injecter un fluide dans des produits alimentaires.**

(30) Priorité : **08.02.85 FR 8501921**

(43) Date de publication de la demande :
**20.08.86 Bulletin 86/34**

(45) Mention de la délivrance du brevet :
**19.06.91 Bulletin 91/25**

(84) Etats contractants désignés :
**DE FR GB IT**

(56) Documents cités :
**EP-A- 0 127 032**
**WO-A-83/02547**
**DE-A- 1 922 158**
**FR-A- 2 146 291**
**FR-A- 2 443 210**

(56) Documents cités :
**GB-A- 1 042 958**
**NL-A- 8 102 121**
**US-A- 1 986 074**
**US-A- 2 741 974**
**US-A- 2 756 666**

(73) Titulaire : **KAUFLER SA**
**Zone Artisanale des Parpareux**
**F-22604 Loudeac (FR)**

(72) Inventeur : **Corveler, Yvon**
**Rue de Keréostin**
**F-56300 Pontivy (FR)**

(74) Mandataire : **Martin, Jean-Jacques et al**
**Cabinet REGIMBEAU Corre, Martin, Schrimpf,**
**Warcoin, Ahner 11, rue Franz Heller**
**F-35700 Rennes (FR)**

## Description

La présente invention concerne une machine à injecter un fluide dans des produits alimentaires, destinée notamment à injecter de la saumure dans des viandes, par exemple dans des jambons.

Les machines de ce type comprennent généralement une tête d'injection pourvue d'une multitude d'aiguilles fines creuses qui sont alimentées en fluide de traitement au moyen d'une pompe, et cette tête est mobile verticalement suivant un mouvement rectiligne de montée-descente au-dessus d'un plateau horizontal. Un dispositif d'avancement pas-à-pas fait avancer les produits sur ce plateau, tandis que des moyens d'entraînement de la tête d'injection déplacent celle-ci alternativement vers le plateau de telle sorte que les aiguilles s'enfoncent dans les produits se trouvant sous la tête d'injection, et que le fluide soit ainsi injecté au coeur de ces produits.

Pour le traitement de la plupart des produits, et en particulier dans le cas où on injecte de la saumure dans des viandes afin d'en améliorer la conservation, il est essentiel que la distribution du fluide au sein du produit se fasse de manière régulière et uniforme. Cette distribution doit également se faire de manière identique, reproductible pour l'ensemble des produits qui seront successivement traités.

C'est pourquoi la présente invention a pour objectif principal de proposer une machine permettant une distribution uniforme et parfaitement reproductible d'un fluide dans des produits alimentaires.

Un autre objectif de l'invention est de proposer une machine ayant un bon rendement, c'est-à-dire travaillant à une cadence élevée, grâce à une conception particulière, d'une part des moyens d'entraînement de la tête d'injection, d'autre part du dispositif d'avancement des produits sur le plateau, en synchronisme avec le mouvement de la tête d'injection.

Un autre objectif de l'invention est de proposer une machine propre sur le plan de l'hygiène des produits traités, ceux-ci étant maintenus à l'abri des salissures et éclaboussures diverses éventuelles pouvant provenir des différents organes de commande de la machine.

Un autre objet de l'invention est de proposer une machine simple, robuste, et peu coûteuse.

Dans les machines connues du genre mentionné ci-dessus, divers dispositifs d'entraînement de la tête d'injection ont déjà été proposés qui sont des dispositifs mécaniques, hydrauliques, pneumatiques, ou même hybrides mécanique-hydraulique.

En général, les dispositifs d'entraînement mécaniques utilisés comportent un mécanisme à bielle-manivelle qui provoque une descente de la tête d'injection à une vitesse variant de manière sinusoïdale dans le temps ; ces dispositifs ne permettent donc pas de distribuer uniformément le fluide de traitement dans le produit, ce qui est contraire au principal objectif recherché.

Une machine utilisant un tel dispositif d'entraînement est décrite par exemple dans le document US-A-2 741 974. Il s'agit d'une machine à injecter un fluide, tel que de la saumure dans des produits alimentaires, et notamment dans des viandes. La machine comprend une tête d'injection à aiguilles multiples guidée verticalement, un plateau horizontal apte à supporter les produits à traiter disposé en-dessous de ladite tête d'injection, des moyens d'avancement pas-à-pas des produits à traiter sur ce plateau, et des moyens d'entraînement de la tête d'injection suivant un mouvement rectiligne alternatif de montée et de descente. Ces moyens d'entraînement comprennent une bielle qui est articulée sur un maneton excentré porté par un disque disposé au-dessous dudit plateau horizontal et monté sur un arbre moteur tournant à vitesse constante. Ce disque a un contour en forme de came, qui fait partie des moyens d'avancement pas-à-pas des produits à traiter.

Dans le cas d'un dispositif hydraulique, tel que par exemple celui décrit dans le document WO-A-83 02547, l'entraînement de la tête d'injection par un vérin hydraulique permet généralement de réaliser une descente à vitesse constante de la tête d'injection et donc d'obtenir une distribution satisfaisante du fluide dans le produit traité. Cependant, une telle machine présente l'inconvénient d'être relativement lente, ne permettant pas d'obtenir des rendements élevés.

Dans le cas d'un dispositif pneumatique, la tête d'injection est déplacée au moyen d'un vérin pneumatique ; malheureusement la compressibilité du fluide pneumatique ne permet pas une descente régulière de la tête d'injection, le mouvement de cette tête étant tributaire de la résistance qui lui est opposée par le produit en cours de traitement ; un tel dispositif ne permet pas non plus une parfaite reproductibilité de traitement d'un produit à l'autre.

Enfin, les machines à commande hybride mécanique hydraulique telles que celles décrites par exemple dans le document FR-A-2 443 210 ne donnent pas non plus entière satisfaction en raison de leur grande complexité, source de pannes, et de leur prix de revient prohibitif.

La machine qui fait l'objet de la présente invention ne présente pas les inconvénients des machines connues qui viennent d'être énoncées, cette machine permettant au contraire d'atteindre les objectifs visés plus haut.

Dans cette machine, comme dans la réalisation selon US-A-2 741 974, les moyens d'entraînement de la tête d'injection comprennent au moins une came en forme de disque disposée au-dessous du plateau horizontal supportant les produits à traiter, cette came étant montée sur un arbre moteur horizontal tournant à vitesse constante, et le résultat recherché est obtenu grâce au fait que ladite came présente une gorge à contour fermé dont un tronçon est conformé en spirale d'Archimède centrée sur l'axe de rotation de la came, cette gorge recevant un organe suiveur guidé verticalement qui est accouplé à la tête d'injection de manière à provoquer une descente à vitesse constante de celle-ci.

En effet, dans un système de coordonnées polaires, une spirale d'Archimède est définie par une équation du genre $R = K\alpha$, dans laquelle R et $\alpha$ sont les coordonnées polaires (rayon et angle) d'un point de la courbe, et K est une constante.

Ainsi, comme la came tourne à vitesse constante, l'organe suiveur est déplacé dans un mouvement linéaire et uniforme par rapport au centre de la came, et ce mouvement à vitesse constante est transmis à la tête d'injection.

L'utilisation d'une came à gorge de contour fermé, permet de commander le mouvement rectiligne alternatif de la tête d'injection dans les deux sens (montée et descente), de manière extrêmement simple et fiable.

En outre, la disposition du mécanisme de commande au-dessous du plateau horizontal supportant les produits à traiter évite que les salissures éventuelles, telles par exemple que des projections d'huile, ne soient transmises aux produits alimentaires se trouvant sur le plateau.

Dans une forme de réalisation préférentielle de l'invention, la gorge de came présente un second tronçon spiral qui est conformé pour provoquer une remontée rapide de la tête d'injection et une troisième tronçon circulaire qui provoque un arrêt momentané de la tête d'injection en position haute.

Grâce à cet arrangement, d'une part on obtient une cadence de fonctionnement élevée et d'autre part, il est possible de synchroniser facilement l'avance des produits avec le mouvement de montée et de descente de la tête d'injection, l'avance des produits pouvant se faire lorsque la tête d'injection se trouve en phase d'immobilisation temporaire en position haute.

Dans un mode de réalisation préférentiel particulièrement robuste et fiable, dans lequel la tête d'injection est guidée par des bords latéraux sur une paire de colonnes verticales disposées de chaque côté du plateau horizontal, les moyens de commande de la tête d'injection comprennent deux cames identiques et l'arbre moteur est disposé transversalement par rapport à la direction d'avancement des produits sur le plateau horizontal, chacune de ces cames étant montée à l'une des extrémités de l'arbre moteur de manière à coopérer avec un coulisseau latéral qui est guidé sur des colonnes verticales et est relié par une tige de transmission de mouvement à l'un des bords latéraux de la tête d'injection.

Selon une caractéristique additionnelle de l'invention, les moyens d'avancement pas-à-pas des produits à traiter comprennent une came montée sur cet arbre moteur.

De manière connue, le plateau horizontal supportant les produits à traiter est avantageusement constitué d'une grille formée d'une série de barres longitudinales parallèles espacées, entre lesquelles sont disposées une série de barrettes dentelées animées à la fois d'un mouvement longitudinal horizontal de va-et-vient et d'un mouvement vertical de montée et de descente, ces barrettes étant adaptées pour faire avancer pas-à-pas les produits sur les barres longitudinales ; dans ce cas, les barrettes dentelées reçoivent leur mouvement de va-et-vient de la came par l'intermédiaire d'un levier basculant portant un organe suiveur, des moyens élastiques étant prévus qui appliquent en permanence cet organe suiveur contre la came, en agissant sur le levier basculant.

De manière particulièrement simple, les barrettes dentelées peuvent recevoir leur mouvement vertical de montée et de descente d'un plateau de soulèvement solidaire de l'organe suiveur qui coopère avec la came d'entraînement de la tête d'injection. Dans ce cas, le plateau de soulèvement transmet son mouvement de montée et de descente aux barrettes dentelées par l'intermédiaire de biellettes articulées reliées par une tringle, l'ensemble constituant un parallèlogramme déformable.

Selon une autre caractéristique intéressante de l'invention, la machine est équipée d'un dispositif d'attendrissement comprenant une tête pourvue de lames qui est située en aval de la tête d'injection au-dessus du plateau horizontal, cette tête étant entraînée par l'arbre moteur dans un mouvement vertical alternatif de montée et de descente. La tête d'attendrissement peut être entraînée avantageusement par un dispositif à bielle-manivelle qui est mis en rotation par l'arbre moteur via une chaîne ou une courroie de transmission.

D'autres caractéristiques et avantages de l'invention apparaîtront de la description et des dessins annexés qui en présentent, à titre d'exemple non limitatif, un mode de réalisation préférentiel.

Sur ces dessins :
– la figure 1 est une vue de face de la machine, avec arrachement partiel de certaines parties ;
– la figure 2 est une vue de côté, partiellement coupée par un plan transversal, de la machine de la figure 1 ;
– la figure 3 est une vue schématique de la came de commande du mouvement de la tête d'injection ;
– la figure 4 est une vue schématique de la came de commande du mouvement de va-et-vient du dispositif d'avancement des produits ;
– la figure 5 est une vue de détail montrant le mécanisme de soulèvement des barrettes dentelées ;
– la figure 6 est un diagramme explicatif des phases de déplacement de la tête d'injection et du dispositif d'avancement des produits.

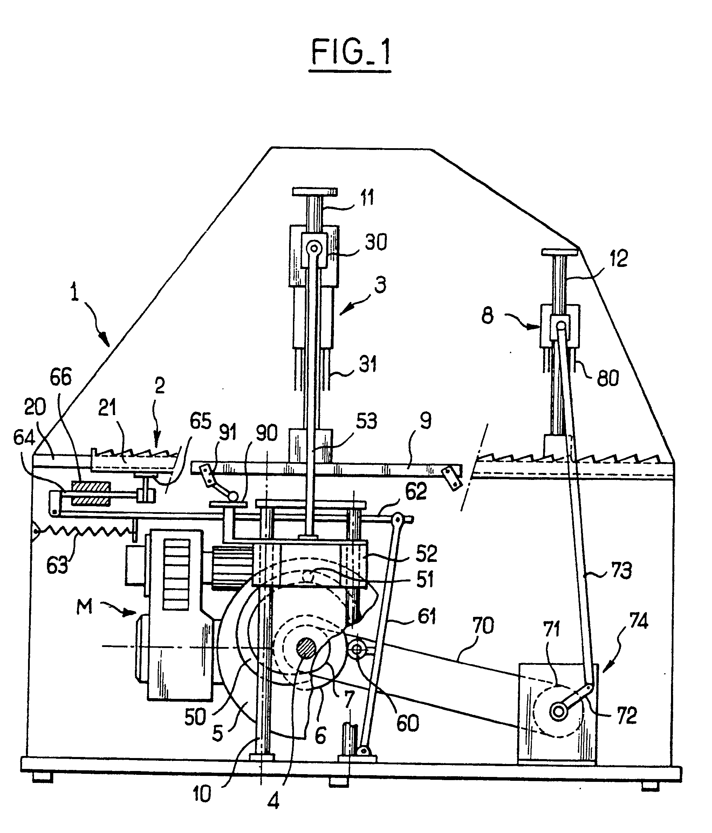

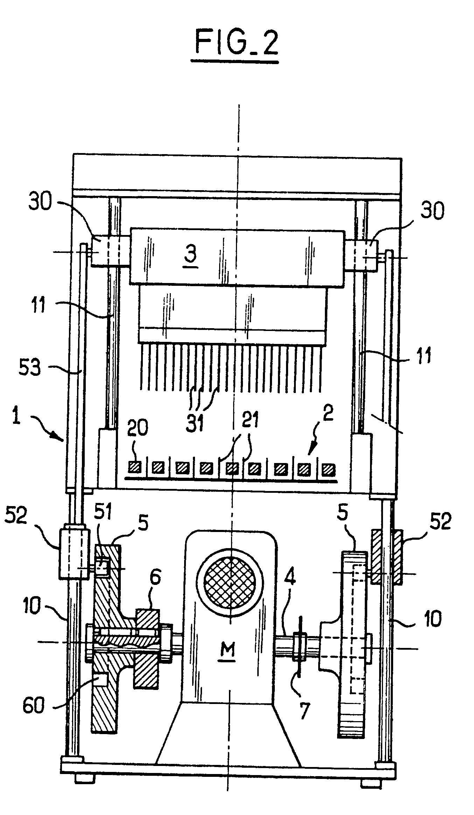

La machine représentée sur les figures 1 et 2 comprend un bâti généralement désigné par la référence 1, qui porte un plateau horizontal 2 ; au-dessus de ce plateau sont disposées une tête d'injection désignée par la référence 3 et une tête d'attendrissement désignée par la référence 8 ; au-dessous du plateau horizontal 2, se trouve un moteur électrique M d'entraînement de la machine, un arbre horizontal transversal 4 sur lequel sont calées deux cames d'extrémité identiques 5, une autre came 6 et un pignon 7, un dispositif d'entraînement 74 de la tête d'attendrissement.

La tête d'injection 3 est une tête de type connu, à aiguilles multiples 31, et ne sera pas décrite ici en détail, car sa structure ne fait pas partie, à proprement parler, de la présente invention ; les aiguilles 31, dirigées vers le plateau horizontal 2, sont alimentées en fluide de traitement des produits, par exemple en saumure, à partir d'un réservoir, au moyen d'une pompe, par l'intermédiaire d'un conduit ; ces organes n'ont pas été représentés sur les dessins dans un seul but de simplification ; le réservoir de fluide de traitement et la pompe sont de préférence situés sous le plateau horizontal 2 également.

La tête d'injection 3 est guidée, par ses bords latéraux 30, sur une paire de colonnes verticales 11 situées de chaque côté du plateau 2.

La tête d'attendrissement 8 est également un appareil de type connu qui est pourvu d'une multitude de lames 80 dirigées vers le plateau 2 et destinées à s'enfoncer dans le produit traité, afin de l'attendrir après l'injection de saumure. La tête 8 est guidée, de manière analogue à la tête 3, sur des colonnes latérales 12.

Le plateau horizontal 2 a la forme d'une grille composée d'une série de barres 20 placées horizontalement, parallèlement les unes aux autres, avec un certain écartement mutuel ; entre chacune des barres est disposée une barrette 21 dont la partie supérieure est dentelée ; l'ensemble des barrettes 21 est fixé à un support commun situé en dessous des barres 20; les barrettes 21 sont mobiles à la fois longitudinalement et verticalement par rapport aux barres fixes 20; elles sont adaptées, comme on le verra par la suite, pour faire avancer progressivement, pas-à-pas, les produits sur les barres 20, avant et après traitement.

Par rapport à la figure 1, l'avancement des produits se fait de gauche à droite.

L'arbre transversal 4 est guidé dans sa partie centrale dans le bâti 1, et est entraîné en rotation, à vitesse constante, par le moteur électrique M ; le moyen de transmission de mouvement du moteur M à l'arbre 4, qui n'a pas été représenté sur les figures pour ne pas les alourdir inutilement, peut être un moyen quelconque, par exemple un système par chaîne et pignon.

Comme on l'a déjà mentionné, à chacune de ses extrémités, l'arbre 4, appelé arbre moteur, porte une came 5 ; ces deux cames sont des cames identiques, calées sur les extrémité de l'arbre 4 au moyen de clavettes ; le calage des deux cames 5 sur l'arbre 4 est rigoureusement le même. Les cames 5 ont la forme d'un disque, centré sur l'arbre 4, dont la face latérale extérieure porte une rainure, ou gorge 50, de contour fermé. Dans cette gorge 50 est logé un organe suiveur de came 51, sous forme de préférence d'un galet fou, qui est porté par un coulisseau 52 coulissant sur une paire de colonnes latérales verticales 10, disposées sur un côté du bâti ; le coulisseau 52 est fixé à une tige de transmission de mouvement 53 disposée verticalement qui est attachée, par son extrémité supérieure, à l'un des bords latéraux 30 de la tête d'injection 3.

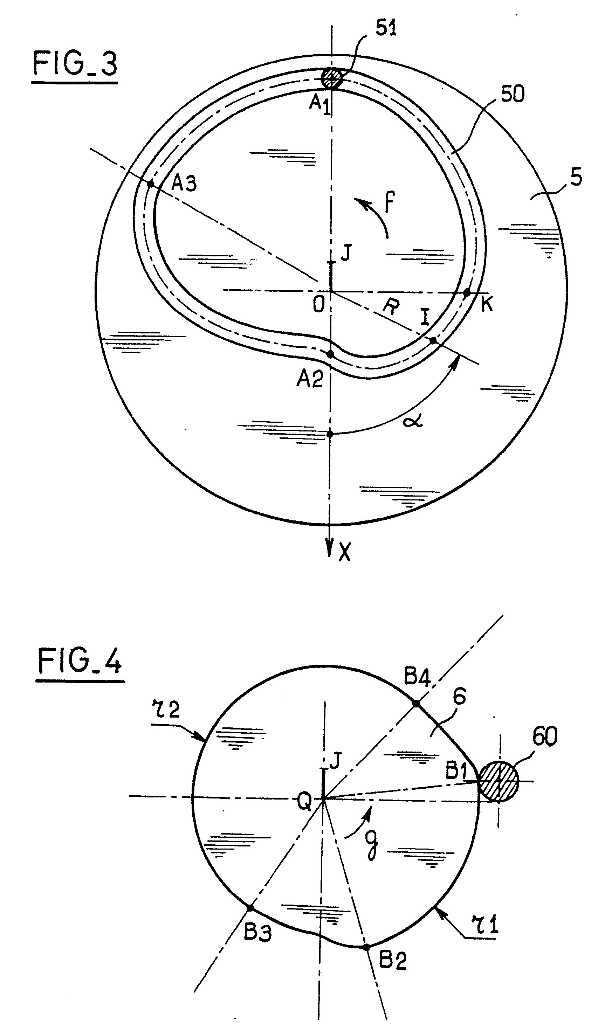

La forme exacte de la gorge de chacune des cames 5 sera précisée plus loin, en référence à la figure 3.

Sur l'axe moteur 4, est également calée, au moyen d'une clavette, une came 6 dont la partie active est constituée par la face latérale. Le contour exact de la came 6 sera précisé ultérieurement, en référence à la figure 4.

Sur l'arbre moteur 4 est également montée une roue dentée, ou pignon 7 qui reçoit une chaîne de transmission 70 destinée à l'entraînement de la tête d'attendrissement 8.

La came 6 coopère avec une organe suiveur, de préférence en forme de galet fou 60, qui est porté par un levier 61 articulé dans le bâti autour d'un axe horizontal transversal, par son extrémité inférieure. L'extrémité supérieure du levier 61 est articulée sur une tige 62 s'étendant suivant une direction approximativement horizontale ; l'autre extrémité de cette tige est elle-même articulée sur une tige 64 qui est guidée en translation suivant une direction longitudinale et horizontale dans un élément 66 du bâti. La tige coulissante 64 porte une plaque de support 65 qui supporte la série de barrettes dentelées 21.

Un ressort de traction 63 accroché à une partie fixe du bâti agit sur la tige 62 de manière à solliciter au basculement le levier 61 en appliquant élastiquement l'organe suiveur de came 60 contre la came 6.

On comprendra aisément que la rotation de la came 6 va provoquer un mouvement alternatif de basculement du levier 61 et entraîner corrélativement un déplacement rectiligne alternatif longitudinal de la tige 64, et de l'ensemble des barrettes dentelées 21 qui lui sont solidaires.

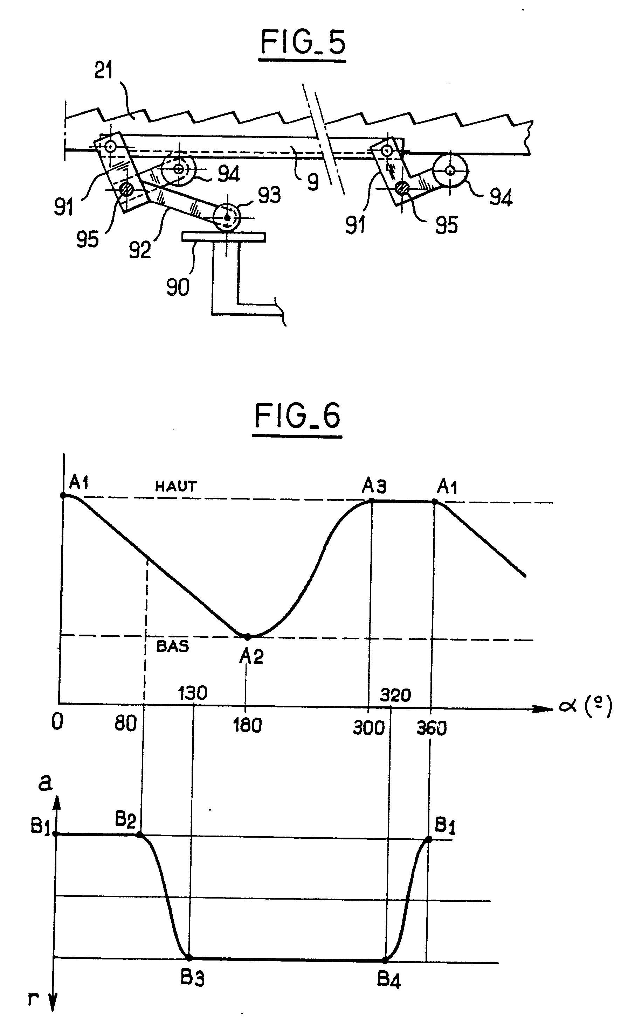

En plus de leur mouvement de va-et-vient horizontal, les barrettes 21 sont dotées d'un mouvement alternatif de montée et de descente, dont la commande est réalisée jar un plateau 90 solidaire de l'un des coulisseaux latéraux 52 ; ce plateau agit sur un levier 91 agencé pour transmettre le mouvement du coulisseau 52, lorsque celui-ci arrive en position haute, aux barrettes 21 comme on le comprendra facilement en se référant à la figure 5.

Sur cette figure, on constate que la série de barrettes 21 est supportée par deux séries de galets 94 disposées l'une à l'entrée du plateau 2 et l'autre à la sortie de ce plateau.

Les rouleaux 94 sont tous deux portés par des leviers 91 articulés autour d'un axe fixe 95 transversal ; les deux leviers 91 sont reliés l'un à l'autre par une tringle horizontale 9, de manière à former une sorte de parallèlogramme déformable.

L'un des leviers 91 est solidaire d'une tige 92 qui porte un galet 93 positionné de telle manière qu'il soit en contact avec le plateau 90 lorsque celui-ci arrive en position haute ; on comprendra donc que le soulèvement du plateau 90 provoque le pivotement des deux leviers 91 dans le sens du soulèvement des rouleaux 94, et donc des barrettes dentelées 21, et qu'inversement, lorsque le plateau 90 est descendu au-delà d'une certaine course, que ces galets redescendent, permettant aux barrettes 21 de redescendre en position basse.

Lorsque les barrettes 21 se trouvent en position haute, elles font saillie par rapport au niveau supérieur des barres 20, de sorte qu'elles sont aptes à se saisir, par leur partie dentelée, des produits posés sur ces barres 20 ; au contraire, lorsque les barrettes 21 sont en position basse, elles sont escamotées dans la grille composée des barres 20 et ne sont pas en contact avec les produits.

Le dispositif 74 d'entraînement de la tête d'attendrissement 8 est également disposé au-dessous du plateau horizontal 2 ; ce dispositif reçoit son mouvement de commande de la chaîne de transmission 70, laquelle entraîne un pignon 71 ; il s'agit d'un dispositif cpmprenant une paire de bielles 73 et de manivelles 72 identiques, situées sur les côtés latéraux de la machine, et agissant chacune sur un bord de la tête d'attendrissement 8.

On constate donc que l'ensemble des mouvements de la machine, à savoir les mouvements de montée et de descente de la tête d'injection et de la tête d'attendrissement, ainsi que les mouvements de va-et-vient et de montée-descente des barrettes d'avancement des produits 21, sont commandés à partir d'un arbre moteur unique 4.

A la figure 3, on a représenté en détail la came 5 ; le contour nominal de la gorge fermée 50 a été représenté en traits mixtes ; on a désigné par 0 le centre de la came en forme de disque 5, ce centre 0 correspondant à l'axe de rotation de l'arbre 4 ; le clavetage de la came sur l'axe 4 a été figuré schématiquement par le segment 0J. Le point 0 a été pris comme centre des coordonnées polaires, et comme axe des origines on a pris un axe 0X dont la direction correspond à celle du clavetage 0J ; on désignera par $\alpha$ l'angle que fait un segment 0I avec l'axe 0X, I étant un point quelconque du centre de la gorge 50.

On désignera par R la longueur du segment 0I.

Conformément à l'invention; la courbe formée par la gorge 50, présente un tronçon ayant la forme d'une spirale d'Archimède dont l'équation est du genre $R = R_0 + C\alpha$.

Selon le mode de réalisation de la figure 3, le tronçon en forme de spirale d'Archimède s'étend sur un angle $\alpha = \pi$ radian, les limites de ce tronçon étant désignées par les lettres A2 et A1. On a donc $OA2 = R_0$ et $OA1 = R_0 + C\pi$.

A titre indicatif, le rayon de la came 5 peut être égal à 320 mm, et l'équation de la gorge 50 peut être: $R = 90 + \frac{180}{\pi}\, \alpha$, dans laquelle R est exprimé en millimètres et $\alpha$ en radians ; on a donc les dimensions $OA2 = 90$ mm, et $OA1 = 270$ mm ; pour $\alpha = \frac{\pi}{2}$, la longueur du segment correspondant OK est de 180 mm.

L'extrémité du tronçon en spirale d'Archimède qui présente le glus grand rayon, c'est-à-dire l'extrémité A1, se prolonge par une partie A1A3 en forme d'arc de cercle centrée en 0 ; la longueur de ce secteur angulaire est par exemple de 60° $(\frac{\pi}{3})$ ; l'extrémité A3 du tronçon en arc de cercle A1A3 se raccorde à l'extrémité A2 de la spirale d'Archimède A2A1, par l'intermédiaire d'une spirale destinée à assurer un raccordement doux de ces deux tronçons ; dans le cas décrit, l'amplitude angulaire de cette spirale de raccordement est de 120° $(\frac{2\pi}{3})$.

Le sens de rotation de la came est figuré par la flèche f à la figure 3.

On prend comme position initiale la position dans laquelle l'organe suiveur 51 se trouve au point A1 ; la tête d'injection 3 se trouve par conséquent dans sa position haute ; au fur et à mesure de la rotation de la came 5, l'organe suiveur 51, guidé par la gorge de rayon décroissant 50, va se déplacer verticalement vers le bas, jusqu'à ce qu'il ait parcouru la totalité du tronçon A1A2 ; grâce à la forme en spirale d'Archimède de ce tronçon, cette descente se fait à une vitesse parfaitement constante.

Ensuite, l'organe suiveur 51 parcourt le tronçon A2A3, qui réalise la remontée de la tête d'injection 3 ; cette remontée se fait de manière sensiblement plus rapide que la descente précédente, du fait que l'amplitude angulaire de ce tronçon est inférieure à celle du tronçon A1A2 (120° au lieu 180°).

Enfin, l'organe suiveur 51 parcourt de tronçon en arc de cercle A3A1 ; durant cette phase, il reste donc fixe, et la tête d'injection 3 séjourne en position haute.

La came 6 de la figure 4 possède un centre Q qui correspond également à l'axe de rotation de l'arbre moteur 4, et un clavetage QJ qui correspond à celui de la came 5. Cette came présente deux tronçons en arc de cercle : un tronçon B1B2 de rayon r1 et un tronçon B3B4 de rayon r2 inférieur à r1.

Des tronçons intermédiaires B4B1 et B2B3 assurent une transmission progressive entre ces parties en arc de cercle ; les secteurs angulaires décrits par chacun des tronçons sont par exemple de 80° pour le tronçon B1B2, de 50° pour le tronçon B2B3, de 190° pour le tronçon B3B4, et de 40° pour le tronçon B2B1.

Dans la position initiale, qui correspond à la position de l'organe suiveur 51 de la came 5 au point A1, l'organe suiveur 60 de la came 6 se trouve au point B1.

La came 6 tournant à vitesse constante, dans le même sens que la came 5 (flèche g figure 4), lorsque l'organe suiveur 60 parcourt le tronçon en arc de cercle B1B2, le levier 61 est maintenu dans si position avancée extrême, si bien que les barrettes 21 se trouvent également en position avancée ; durant le parcours B2B3, le levier 61 va basculer vers l'arrière (dans le sens trigonométrique à la figure 1), de manière à provoquer le recul des barrettes 21 ; durant le parcours B3B4, les barrettes 21 sont maintenues dans leur position reculée ; enfin, durant le parcours B4B1, le levier 61 est basculé vers l'avant (dans le sens des aiguilles d'une montre sur la figure 1), et provoque l'avancement des barrettes 21.

La figure 6 représente sous forme de diagrammes les différentes phases qui viennent d'être décrites, de manière à montrer la synchronisation entre les mouvements de la tête d'injection et celle des barrettes d'avancement des produits.

La partie supérieure de cette figure représente les mouvements de montée et de descente de la tête d'injection 3 ; la partie inférieure de la figure représente les mouvements d'avance (a) et de recul (r) des barrettes 21. On a repris sur ces diagrammes les mêmes points Ai et Bi que ceux utilisés pour la description des cames 5 et 6 en référence aux figures 3 et 4.

On a indiqué en abscisse l'angle $\alpha$ de la rotation des cames 5 et 6, la graduation étant effectuée en degrés pour une meilleure commodité.

Le diagramme correspondant aux mouvements de la tête d'injection montre que sur un angle de 0 à 180° on a une descente à vitesse constante de cette tête (A1A2) suivie d'une remontée rapide (A2A3) et d'un séjour en position haute (A3A1).

Sur le diagramme 2 correspondant aux mouvements des barrettes 21, on constate que ces barrettes séjournent d'abord en position avancée (B1B2), reculent (B2B3), séjournent en position de recul (B3B4), puis avancent (B4B1).

La phase utile de ce diagramme est naturellement constituée par le tronçon B4B1, puisque à ce moment le plateau de soulèvement 90 (qui est solidaire de l'organe suiveur de came 51) se trouve en position haute, et donc a provoqué également le soulèvement des barrettes 21, lesquelles font saillie au-dessus des barres 20 ; durant cette phase, les produits sont donc avancés sur une certaine course sur le plateau horizontal 2.

Au contraire, durant la phase de recul B2B3 des barrettes, l'organe suiveur 51, et donc le plateau de soulèvement 90 qui lui est solidaire, ont quitté leur position haute, et la phase de recul des barrettes se fait en position escamotée à l'intérieur des barres 20, de sorte que ce recul des barrettes n'a aucun effet d'entraînement sur les produits.

L'utilisation d'un attendrisseur n'a d'utilité naturellement que pour certaines applications, en particulier pour le traitement de certaines viandes.

On constatera que l'entraînement de cette tête se faisant par un système à bielle et manivelle, la descente de cette tête se fera à vitesse variable ; toutefois, cela n'a aucune importance pour ce type d'opération, contrairement à l'opération d'injection de fluide dans le produit.

Comme on l'a déjà dit cette machine peut être utilisée pour l'injection d'un fluide dans des viandes, notamment de saumure dans des jambons, ou par exemple de graisse dans des volailles ; toutefois il peut être utilisé pour d'autres types de produits alimentaires, par exemple pour l'injection de produits de conservation dans des poissons ou même dans des fruits et légumes.

Il va de soi que l'invention n'est pas limitée au mode de réalisation préférentiel qui vient décrit à simple titre d'exemple ; elle en embrasse au contraire toutes les variantes. C'est ainsi par exemple qu'il serait naturellement possible d'utiliser, pour la commande du déplacement de la tête d'injection, une came unique (au lieu d'une paire), cette came étant pourvue d'une gorge dont un tronçon à la forme d'une spirale d'Archimède.

En outre, cette came pourrait être disposée horizontalement (et tourner autour d'un axe vertical), l'accouplement de l'organe suiveur avec la tête d'injection étant conçu à cet effet.

Par ailleurs, par "came à gorge" on entend également, bien entendu, toute came techniquement équivalente. C'est ainsi que la came à gorge 5 pourrait être remplacée par une came plate similaire à la came 6 de commande des barrettes, cette came plate étant équipée en certaines zones d'un organe de guidage rapporté, par exemple d'un fer plat ; dans ce cas, le contour extérieur de la came et l'organe rapporté joueraient un rôle identique, pour le guidage de l'organe suiveur 51, à celui des parois de la gorge 50.

Enfin, le dispositif d'entraînement de la tête d'injection, qui fait l'objet de la présente invention, peut naturellement être associé à un dispositif d'avancement des produits différents de celui décrit, par exemple à un dispositif d'avancement à tapis transporteur.

## Revendications

1. Machine à injecter un fluide, tel que de la saumure dans des produits alimentaires et notamment dans des viandes, qui comprend une tête d'injection à aiguilles multiples mobile verticalement, un plateau horizontal apte à supporter les produits à traiter disposé en-dessous de ladite tête d'injection, des moyens d'avancement pas-à-pas des produits à traiter sur ledit plateau, et des moyens d'entraînement de ladite tête d'injection suivant un mouvement rectiligne alternatif de montée et de descente, qui comprennent au moins une came en forme de disque (5) disposée au-dessous dudit plateau horizontal (2) et montée sur un arbre moteur (4) tournant à vitesse constante, caractérisée par le fait que cette came (5) présente une gorge à contour fermé (50) dont un tronçon (A1-A2) est conformé en spirale d'Archimède centrée sur l'axe de rotation (0) de la came et qui reçoit un organe suiveur (51) guidé verticalement qui est accouplé à la tête d'injection (3) de manière à provoquer une descente à vitesse constante de celle-ci.

2. Machine selon la revendication 1, caractérisée par le fait que la gorge (50) présente un second tronçon spiral (A2-A3) conformé pour provoquer une remontée rapide de la tête d'injection (3) et un troisième tronçon (A3-A1) circulaire qui provoque un arrêt momentané de la tête d'injection (3) en position haute.

3. Machine selon les revendications 1 et 2 prises en combinaison, caractérisée par le fait que le premier tronçon en spirale d'Archimède (A1-A2), le second tronçon spiral (A2-A3) et le troisième tronçon (A3-A1) correspondent à des angles ($\alpha$) de rotation de la came (5) qui sont respectivement de 180°, 120° et 60° environ.

4. Machine selon l'une des revendications 1 à 3, dans laquelle la tête d'injection est guidée par ses bords latéraux (30) sur une paire de colonnes verticales (11) disposées de chaque côté du plateau horizontal (2), caractérisée par le fait que lesdits moyens de commande de ladite tête d'injection (3) comprennent deux cames (5) identiques et que l'arbre moteur (4) est disposé horizontalement, transversalement par rapport à la direction d'avancement des produits sur le plateau horizontal (2), chacune de ces cames étant montée à l'une des extrémités de l'arbre moteur (4) de manière à coopérer avec un coulisseau latéral (52) qui est guidé sur des colonnes verticales (10) et est relié par une tige de transmission de mouvement (53) à l'un des bords latéraux (30) de la tête d'injection (3).

5. Machine selon l'une des revendications 1 à 4, caractérisée par le fait que les moyens d'avancement pas-à-pas des produits à traiter comprennent une came (6) montée sur ledit arbre moteur (4).

6. Machine selon la revendication 5, dans laquelle le plateau horizontal supportant les produits à traiter est constituée d'une grille formée de barres longitudinales parallèles espacées (20), entre lesquelles sont disposées une série de barrettes dentelées (21) animées à la fois d'un mouvement longitudinal horizontal de va-et-vient et d'un mouvement vertical de montée et de descente et adaptées pour faire avancer pas-à-pas les produits sur les barres longitudinales (20), caractérisée par le fait que lesdites barrettes dentelées (21) reçoivent leur mouvement de va-et-vient de la came (6) par l'intermédiaire d'un levier basculant (61) portant un organe suiveur (60), des moyens élastiques étant prévus qui sollicitent le levier (61) de manière à appliquer en permanent de cet organe suiveur (40) contre la came (6).

7. Machine selon la revendication 5, caractérisée par le fait que lesdites barrettes dentelées (21) reçoivent leur mouvement vertical de montée et de descente d'un plateau du soulèvement (90) solidaire de l'organe suiveur (51) qui coopère avec la came (5) d'entraînement de la tête d'injection (3).

8. Machine selon la revendication 7, caractérisée par le fait que le plateau de soulèvement (90) transmet son mouvement de montée et de descente aux barrettes dentelées (21) par l'intermédiaire d'une paire de biellettes articulées (91) reliées par une tringle (9).

9. Machine selon l'une des revendications 1 à 8, caractérisée par le fait qu'elle est équipée d'un dispositif d'attendrissement comprenant une tête (8) pourvue de lames (80) qui est située en aval de la tête d'injection (3) au-dessus du plateau horizontal (2), cette tête (8) étant entraînée par ledit arbre moteur (4) dans un mouvement vertical alternatif de montée et de descente.

10. Machine selon la revendication 9, caractérisée par le fait que la tête (8) est entraînée par un dispositif à bielle-manivelle (73-72) qui est mis en rotation par l'arbre moteur (4), via une chaîne de transmission (70).

## Ansprüche

1. Maschine zum Einspritzen einer Flüssigkeit, beispielsweise von Sole, in Lebensmittelprodukte und insbesondere in Fleisch, enthaltend einen Einspritzkopf mit mehreren vertikal beweglichen Nadeln, eine horizontale Platte, die zum Halten der zu behandelnden Produkte bestimmt ist und unter dem genannten Einspritzkopf angeordnet ist, Einrichtungen zum schrittweisen Fortbewegen der zu behandelnden Produkte auf der Platte, und Einrichtungen zum Antreiben des Einspritzkopfes in einer geradlinigen Auf- und Abbewegung, enthaltend wenigstens eine Nockenscheibe (5), die unter der horizontalen Platte (2) angeordnet und auf einer Motorwelle (4) befestigt ist, die mit konstanter Geschwindigkeit dreht, **dadurch gekennzeichnet,** daß diese Nockenscheibe (5) eine in sich geschlossene Rille (50) aufweist, von der ein Abschnitt (A1-A2) als Archimedische Spirale ausgebildet ist, die um die Drehachse (0) der Nockenscheibe zentriert ist und die einen vertikal geführten Nockenfolger (51) aufnimmt, der mit dem Einspritzkopf (3) derart gekuppelt ist, daß er eine Abwärtsbewegung desselben mit konstanter Geschwindigkeit hervorruft.

2. Maschine nach Anspruch 1, **dadurch gekennzeichnet**, daß die Rille (50) einen zweiten spiralförmigen Abschnitt (A2-A3) aufweist, der so gestaltet ist, daß er eine schnelle Aufwärtsbewegung des Einspritzkopfes (3) hervorruft, und einen dritten kreisförmigen Abschnitt (A3-A1) aufweist, der einen vorübergehenden Halt des Einspritzkopfes (3) in angehobener Position bewirkt.

3. Maschine nach den Ansprüchen 1 und 2, **dadurch gekennzeichnet**, daß der erste beschnitt (A1-A2) in Form einer Archimedischen Spirale, der zweite spiralförmige Abschnitt (A2-A3) und der dritte Abschnitt (A3-A1) Drehwinkeln (α) der Nockenscheibe (5) entsprechen, die etwa 180°, 120° bzw. 60° aufweisen.

4. Maschine nach einem der Ansprüche 1 bis 3, bei der der Einspritzkopf durch seine Seitenränder (30) auf einem Paar vertikalen Säulen (11) geführt ist, die zu jeder Seite der horizontalen Platte (2) angeordnet sind, **dadurch gekennzeichnet**, daß die Steuereinrichtungen des Einspritzkopfes (3) zwei identische Nockenscheiben (5) aufweisen und die Motorwelle (4) horizontal, quer zur Vorschubrichtung der Produkte auf der horizontalen Platte (2) angeordnet ist, wobei jede dieser Nockenscheiben an einem der Enden der Motorwelle (4) derart befestigt ist, daß sie mit einem seitlichen Schlitten (52) zusammenwirkt, der auf den vertikalen Säulen (10) geführt und durch eine Bewegungsübertragungsstange (53) mit einem der seitlichen Ränder (30) des Einspritzkopfes (3) verbunden ist.

5. Maschine nach einem der Ansprüche 1 bis 4, **dadurch gekennzeichnet**, daß die Einrichtungen zum schrittweisen Fortbewegen der zu behandelnden Produkte eine Nockenscheibe (6) enthalten, die auf der Motorwelle (4) befestigt ist.

6. Maschine nach Anspruch 5, bei der die horizontale Platte, die die zu behandelnden Produkte trägt, von einem Gitter gebildet ist, das aus parallelen, im bestand zueinander angeordneten Längsstäben (20) besteht, zwischen denen eine Serie von Sägezahnstäben (21) angeordnet sind, die zugleich in einer horizontalen, längsgerichteten Hin- und Herbewegung und einer vertikalen Auf- und Abbewegung angetrieben sind und dazu eingerichtet sind, die Produkte auf den Längsstäben (20) schrittweise vorzubewegen, **dadurch gekennzeichnet**, daß die genannten Sägezahnstäbe (21) ihre Hin- und Herbewegung von dem Nocken (6) mittels eines Kipphebels (61) empfangen, der ein Nockenfolgerorgan (60) trägt, wobei elastische Einrichtungen vorgesehen sind, die den Hebel (61) derart beaufschlagen, daß das Nockenfolgerorgan (40) ständig gegen die Nockenscheibe (6) gedrückt wird.

7. Maschine nach Anspruch 5, **dadurch gekennzeichnet**, daß die Sägezahnstäbe (21) ihre vertikale Auf- und Abbewegung von einer Hubplatte (90) erhalten, die fest mit dem Nockenfolger (51) verbunden ist, der mit der Antriebsnockenscheibe (5) für den Einspritzkopf (3) zusammenwirkt.

8. Maschine nach Anspruch 7, **dadurch gekennzeichnet**, daß die Hubplatte (90) ihre Auf- und Abbewegung auf die Sägezahnstäbe (21) mittels eines Paares von Kipphebeln (91) übertragen, die durch eine Lenkstange (9) miteinander verbunden sind.

9. Maschine nach einem der Ansprüche 1 bis 8, **dadurch gekennzeichnet**, daß sie mit einem Steaker versehen ist, umfassend einen Kopf (8), der mit Klingen (80) versehen ist, der vor dem Einspritzkopf (3) über der horizontalen Platte (2) angeordnet ist, wobei dieser Kopf (8) von der Motorwelle (4) in einer vertikalen Auf- und Abbewegung angetrieben ist.

10. Maschine nach Anspruch 9, **dadurch gekennzeichnet**, daß der Kopf (8) von einer Kurbel-Pleuel-Vorrichtung (73-72) angetrieben ist, die von der Motorwelle (4) über eine Transmissionskette (70) in Drehung versetzt ist.

**Claims**

1. A machine for injecting a fluid such as brine into food products, and in particular into meats, which comprises a vertically movable multiple needle injection head, a horizontal surface for supporting the products receiving treatment located beneath the said injection head, means for the stepwise advancing of products requiring treatment upon the said surface, and means for driving the said injection head in an alternating straight up and down movement which comprise at least one cam in the form of a disc (5) placed beneath the said horizontal surface (2) and mounted on a drive shaft (4) turning at constant speed, characterised in that this cam (5) has a groove with an enclosed contour (50) of which one section (A1-A2) is in the shape of an Archimedes spiral centred on the axis of rotation (0) of the cam and contains a vertically guided follower member (51) which is coupled to the injection head (3) in such a way as to cause the latter to descend at constant speed.

2. A machine according to claim 1, characterised in that the groove (50) has a second spiral section (A2-A3) shaped to cause a rapid upward return movement of the injection head (3) and a third circular section (A3-A1) which causes the injection head (3) to stop momentarily at the top position.

3. A machine according to claims 1 and 2 taken in combination, characterised in that the first section in the form of an Archimedes spiral (A1-A2), the second spiral section (A2-A3) and the third section (A3-A1) correspond to angles of rotation (α) of the cam (5) which are approximately 180°, 120° and 60° respectively.

4. A machine according to one of claims 1 to 3, in which the injection head is guided by its lateral edges (30) on a pair of vertical columns (11) placed on either side of the horizontal surface (2), characterised in that the said means for control of the said injection head (3) comprise two identical cams (5) and in that the drive shaft (4) is placed horizontally, transversely with respect to the direction of advance of the products on the horizontal surface (2), each of these cams being mounted at one of the ends of the drive shaft (4) in such a way as to act in concert with a lateral slide (52) which is guided on vertical columns (10) and is connected by a movement transmission rod (53) to one of the lateral edges (30) of the injection head (3).

5. A machine according to one of claims 1 to 4, characterised in that the stepwise means of advancement for the products requiring treatment comprises a cam (6) mounted on the said drive shaft (4).

6. A machine according to claim 5, in which the horizontal surface supporting the products receiving treatment consists of a grid formed of spaced parallel longitudinal bars (20) between which are located a series of serrated bars (21) to which is simultaneously imparted a back and forth horizontal longitudinal movement and an up and down vertical movement appropriate for advancing the products on the longitudinal bars (20) in steps, characterised in that the said serrated bars (21) have back and forth movement imparted to them by the cam (6) through the intermediary of a rocking lever (61) bearing a follower member (60), elastic means being provided to stress the lever (61) in such a way that the follower member (40) is at all times pressed against the cam (6).

7. A machine according to claim 5, characterised in that the said serrated bars (21) receive their vertical up and down movement from a lifting plate (90) integral with the follower member (51) which acts in concert with the cam (5) driving the injection head (3).

8. A machine according to claim 7, characterised in that the lifting plate (90) transmits its up and down movement to the serrated bars (21) through the intermediary of a pair of articulated connecting rods (91) connected by a rod (9).

9. A machine according to any one of claims 1 to 8, characterised in that it is equipped with a tenderising device comprising a head (8) fitted with blades (80) which is located downstream of the injection head (3) above the horizontal surface (2), this head (8) being driven by the said drive shaft (4) in an alternating up and down vertical movement.

10. A machine according to claim 9, characterised in that the head (8) is driven by means of a crank and connecting rod device (73-72) which is caused to rotate by the drive shaft (4) via a transmission chain (70).

# FIG_1

# FIG. 2

FIG_3

FIG_4

## FIG_5

## FIG_6